Europäisches Patentamt

European Patent Office

Office européen des brevets

(19)

(11) Veröffentlichungsnummer: **0 253 945**
**B1**

(12) **EUROPÄISCHE PATENTSCHRIFT**

(45) Veröffentlichungstag der Patentschrift:
18.04.90

(51) Int. Cl.⁴: **B01D 63/08**

(21) Anmeldenummer: 86890215.6

(22) Anmeldetag: 22.07.86

(54) Membrantasche, Wickelmodul aus einer solchen Membrantasche sowie Verfahren zur Herstellung derselben.

(43) Veröffentlichungstag der Anmeldung:
27.01.88 Patentblatt 88/4

(45) Bekanntmachung des Hinweises auf die Patenterteilung:
18.04.90 Patentblatt 90/16

(84) Benannte Vertragsstaaten:
AT BE CH DE FR GB IT LI NL SE

(56) Entgegenhaltungen:
EP-A- 0 096 340
GB-A- 567 484
GB-A- 582 372
GB-A- 2 063 705
NL-C- 33 245
US-A- 2 686 154

(73) Patentinhaber: VOGELBUSCH GESELLSCHAFT m.b.H.,
Blechturmgasse 11, A-1050 Wien(AT)

(72) Erfinder: Spet, Gerhard, Dipl.-Ing., Scariaweg 49,
A-1160 Wien(AT)

(74) Vertreter: Wolfram, Gustav, Dipl.-Ing.,
Schwindgasse 7 P.O. Box 205, A-1041 Wien(AT)

ACTORUM AG

## Beschreibung

Die Erfindung betrifft eine Membrantasche aus zwei an ihren Rändern miteinander verbundenen Trennmembranen mit Zu- und Ableitungen, einen Wickelmodul aus einer solchen Membrantasche sowie ein Verfahren zur Herstellung derselben.

Die Trennmembranen bestehen in vielen Fällen im wesentlichen aus einer dünnen, vergleichsweise durchlässigen Trägerfolie, auf deren einer Seite die aktive Beschichtung aufgebracht ist (sogenannte asymmetrische Trennmembran).

Es gibt auch Trennmembranen, welche ausschließlich aus der aktiven Schicht selbst bestehen.

Darüber hinaus sind sogenannte symmetrische Trennmembranen erhältlich, bei denen sich auf beiden Seiten einer Trägerfolie eine aktive Beschichtung befindet.

Als aktive Beschichtungen sind eine große Zahl von Polymeren, wie Cellulosederivate, beispielsweise Celluloseacetat, verschiedenste Polyamide, Polysulfone und auch anorganische Materialien, wie Graphitoxid und Zirkonhydroxid bekannt.

Die aktive Beschichtung weist bei Trennmembranen mit Trägerfolie im allgemeinen eine Stärke von lediglich einigen $10^{-3}$ bis $10^{-1}$ mm auf.

Membrantaschen und Wickelmodule werden in Vorrichtungen zur Durchführung von Membrantrennverfahren, wie umgekehrter Osmose, Ultra- oder Mikrofiltration, Gastrennung und Pervaporation eingesetzt.

Bei diesen Verfahren werden die zu behandelnden Medien, nämlich Flüssigkeiten, Lösungen oder Dämpfe, unter Druck an einer Trennmembran vorbeigeführt. Bestimmte Komponenten der an der Trennmembran vorbeigeführten Medien treten als sogenanntes Permeat bevorzugt durch die Membran.

Bei bekannten Membrantaschen oder Wickelmodulen wurden die Trennmembranen an ihren Rändern miteinander einfach verklebt und anschließend an den verklebten Randbereichen vernäht, geheftet oder geklammert.

Die Medien stehen im Inneren von Membrantaschen und Wickelmodulen meist unter ganz erheblichem Druck bis zu etwa 80 bar.

Die bekannten Randverbindungen sind lediglich bei Trennmembranen, die nur aus einer einzigen Schicht bestehen, manchmal ausreichend haltbar.

Bei höheren Temperaturen oder bei mehrschichtigen Trennmembranen sind diese Verbindungsarten jedoch keinesfalls befriedigend. Die Verbindungen werden leck, bei mehrschichtigen Membranen kommt es zu einer Ablösung der innen liegenden aktiven Beschichtung.

Die Erfindung stellt sich die Aufgabe, die aufgezeigten Mängel bekannter Membrantaschen und Wickelmodule zu beheben und auch bei hohen Drucken und Temperaturen dichte und betriebssichere Produkte zur Verfügung zu stellen.

Die gestellte Aufgabe wird bei einer Membrantasche der eingangs definierten Art erfindungsgemäß dadurch gelöst, daß die Ränder der Trennmembranen mindestens zweimal eingebördelt sind und zwischen den aufeinanderliegenden Bördelrändern Klebstofflagen vorgesehen sind.

Die bei Druckbeaufschlagung auftretenden Kräfte wirken somit nicht nur auf eine Randverklebung an den einander zugewendeten Seiten der Trennmembranen, sondern sie verteilen sich auf beide Seiten der Membranen.

Eine Ablösung der innen liegenden aktiven Beschichtung wird auf diese Weise vollständig vermieden.

Nach einer vorteilhaften Ausführungsform sind die Klebstofflagen bei zweimaliger Einbördelung aus einem beidseitig mit Klebstoff beschichteten, U-förmig gebogenen Band gebildet. Die Stabilität einer solchen Membrantasche ist sehr groß, ihre Herstellung ist unkompliziert und zeitsparend.

Zweckmäßig ist zwischen den Trennmembranen innerhalb der Bördelränder eine Lage aus porösem Material als innerer Abstandhalter angeordnet.

Durch eine solche Lage wird das Aneinanderhaften der innenliegenden aktiven Beschichtungen verhindert, und die Formstabilität der Membrantaschen wird erhöht. Als poröses Material kann ein Gewebe, Gewirk oder ein Vlies aus organischen oder anorganischen Fasern verwendet werden, wobei sowohl Natur- als auch Kunstfasern als organische Fasern in Frage kommen. Als anorganische Fasern werden insbesondere Glasfasern in Betracht gezogen. Auch eine Lage aus offenporigem Schaumstoff hat sich für bestimmte Anwendungsfälle als geeignet erwiesen.

Ein erfindungsgemäßer Wickelmodul aus einer beschriebenen Membrantasche ist dadurch gekennzeichnet, daß gelochte Rohre innenseitig zweier einander gegenüberliegender Bördelränder einer rechteckförmigen Membrantasche angeordnet sind, die Membrantasche um eines der Rohre eingerollt ist und daß sich die gerollte Membrantasche in einem Hüllrohr befindet.

Wickelmodule werden insbesondere für Pervaporationen, beispielsweise zur Pervaporation von Äthanol, eingesetzt.

Eine Membrantasche wird erfindungsgemäß hergestellt, indem zunächst zwei aufeinanderliegende Trennmembranen-gegebenenfalls unter Einfügen einer Lage aus porösem Material zwischen die Trennmembranen - an ihren Randbereichen miteinander verklebt werden, sodann die verklebten Ränder unter Zwischenfügung einer Klebstofflage gegenüber einer der beiden Trennmembranen eingebördelt und die so gebildete Bördelleiste unter Zwischenfügung einer zweiten Klebstofflage gegenüber der Trennmembran ein zweites Mal eingebördelt wird.

Nach einer Variante werden die Verklebungen mit einem kalt aushärtenden Klebstoff, wie einem Silikonkleber, hergestellt.

Gemäß einer anderen Ausführungsform werden die Verklebungen mit einem heiß zu verarbeitenden Klebstoff, wie einem Schmelzklebstoff oder einem Heißsiegelkleber, hergestellt.

Schmelzklebstoffe liegen bei Raumtemperatur einkomponentig in fester und lösungsmittelfreier Form vor, sie können sämtlich der Gruppe der Thermoplaste zugeordnet werden, wobei die wichtigsten Polymere Polyamide, Copolyamide und Poly-

aminoamide, gesättigte Polyester und Ethylen-Vinylacetat-Copolymerisate sind.

Unter Heißsiegelklebern versteht man Klebstoffe, die als Dispersionskleber bzw. Kleblacke aufgetragen werden, vor der eigentlichen Verklebung abtrocknen und anschließend mit der Gegenseite unter gleichzeitiger kurzer Hitzeeinwirkung zusammengepreßt werden.

Vorzugsweise werden die verklebten Ränder unter Zwischenfügung eines beidseitig mit Klebstoff beschichteten Bandes zweimal eingebördelt.

Diese Vorgangsweise ist besonders zeitsparend, da zweckmäßig erst nach dem zweiten Einbördeln Druck und gegebenenfalls Hitze auf die gebildete Bördelleiste aufgebracht werden.

Zur Herstellung eines erfindungsgemäßen Wickelmoduls werden zwei gelochte Rohre innenseitig zweier einander gegenüberliegender Bördelränder einer rechteckförmigen Membrantasche parallel zu diesen Bördelrändern in das Innere der Membrantasche eingeführt, wird die Membrantasche - gegebenenfalls nach Auflegen einer Lage aus porösem Material auf die Außenseite der Membrantasche - um eines der Rohre eingerollt, wird die im wesentlichen Zylinderform aufweisende gerollte Membrantasche in ein Hüllrohr gesteckt und das Hüllrohr an einem seiner Enden, von welchem die Rohre aus der gerollten Membrantasche wegführen, mit einer Schicht aus Vergußmasse verschlossen.

Es kann so vorgegangen werden, daß zwei aufeinanderliegende Bahnen von Trennmembranen an beiden Längsseiten gleichzeitig auf die beschriebene Weise miteinander verbunden werden, wobei zunächst eine Membrantasche in Form eines flachen, dichten Schlauches entsteht. Dieser Schlauch kann - gegebenenfalls unter Einführen einer Lage aus porösem Material - unmittelbar zu einem Wickelmodul aufgerollt werden, wobei die während des Aufrollvorganges resultierende gegenseitige Längsverschiebung der beiden Trennmembranen ausgeglichen werden kann, so lange der Klebstoff noch nicht ausgehärtet ist.

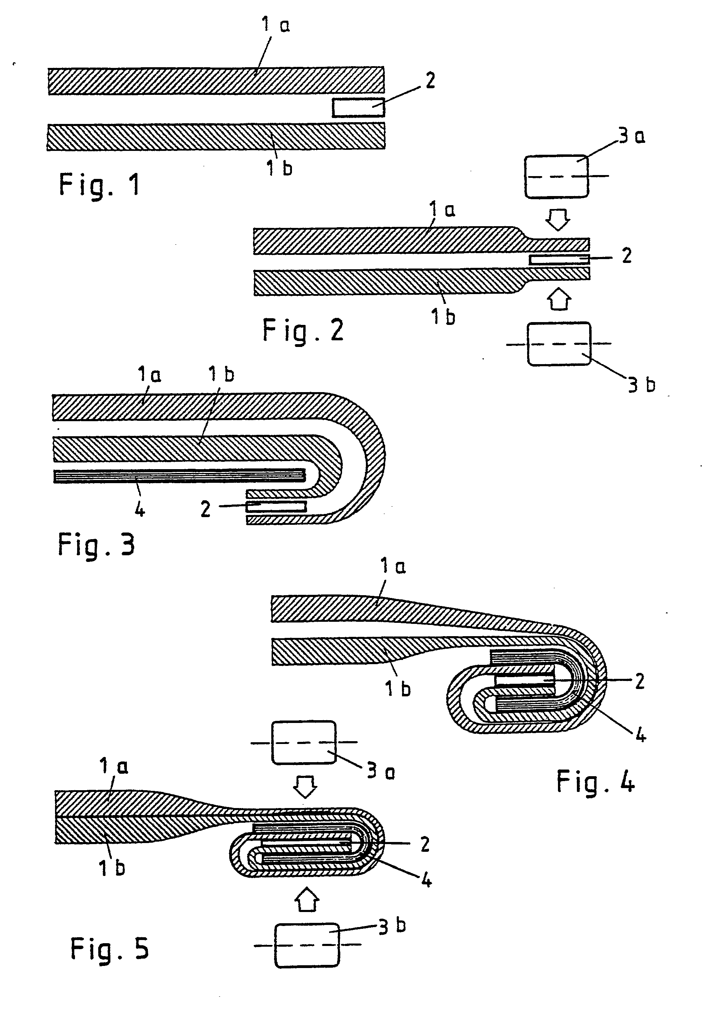

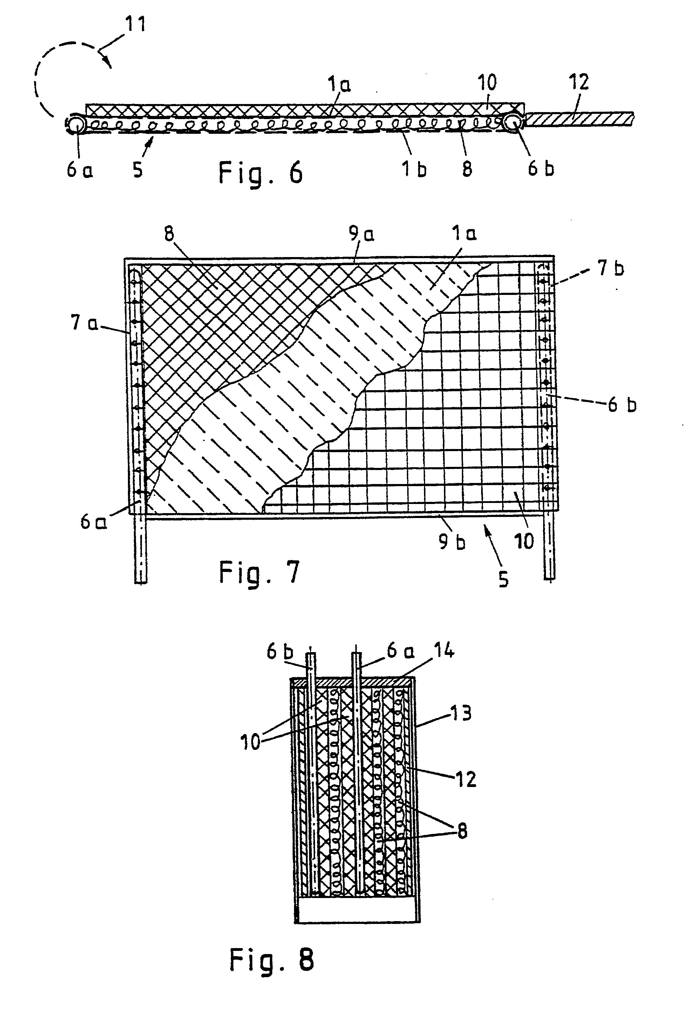

Die Erfindung wird im folgenden anhand der Zeichnung noch näher erläutert. In den Fig. 1 bis 5 ist die Randzone zweier aufeinanderliegender Trennmembranen in verschiedenen Stadien des erfindungsgemäßen Herstellungsverfahrens jeweils im Schitt gezeigt. Fig. 6 stellt einen schematischen Längsschnitt durch eine Ausführungsform einer erfindungsgemäßen Membrantasche mit einer inneren und einer äußeren Lage aus porösem Material dar. In Fig. 7 ist eine teilweise aufgerissene Draufsicht auf eine Membrantasche gemäß Fig. 6 schematisch veranschaulicht. Fig. 8 zeigt einen Querschnitt durch ein Ausführungsbeispiel eines Wickelmoduls.

Mit 1a und 1b sind jeweils die beiden Trennmembranen bezeichnet. In der ersten Stufe der Herstellung gemäß Fig. 1 wird in den Randbereich der Trennmembranen eine erste Klebstofflage 2 eingebracht, wonach die Verklebung durch Anwendung von Druck und gegebenenfalls Hitze-beispielsweise durch Zusammenwalzen zwischen angedeuteten Rollen 3a und 3b - hergestellt wird (Fig. 2).

Die erste Verklebung muß nicht, wie im dargestellten Fall, unmittelbar am Rand der Trennmembranen erfolgen, sondern sie kann auch geringfügig vom Rand eingerückt hergestellt werden. Vorteilhaft kann zur Ausbildung dieser ersten Verklebung auch ein beidseitig mit Klebstoff beschichtetes Band bzw. eine solche Folie verwendet werden.

In einem dritten Schritt nach Fig. 3 werden die verklebten · Ränder unter Zwischenfügung eines beidseitig mit Klebstoff beschichteten Bandes 4 gegenüber einer der beiden Trennmembranen - im gezeigten Fall 1b - eingebördelt bzw. umgelegt.

Die so gebildete Bördelleiste wird - wie aus Fig. 4 ersichtlich ist - im gleichen Sinn nochmals eingebördelt, wobei der in der Bördelleiste befindliche Teil des Bandes 4 gleichzeitig umgelegt wird, so daß das Band 4 im Querschnitt U-Form annimmt. Die beide Schenkel des U fungieren dabei als Klebstofflagen.

Schließlich wird die Randverbindung der Trennmembranen 1a und 1b gemäß Fig. 5 durch erneutes Zusammenpressen bzw. Zusammenwalzen mittels Rollen 3a und 3b fertiggestellt.

Selbstverständlich ist auch eine Verklebung mit jedem anderen der weiter oben erwähnten Kleostoffe statt mit einem beidseitig beschichteten Klebeband oder -folie möglich, sofern die Klebstellen gegen die in Betracht kommenden Medien und Temperaturen genügend beständig sind.

Die allgemein mit 5 bezeichnete Membrantasche nach den Fig. 6 und 7 weist Rechteckform auf. Als Zu- und Ableitung für die aufzutrennenden Medien sind zwei gelochte Rohre 6a und 6b vorgesehen, welche innenseitig zweier einander gegenüberliegender Bördelränder 7a und 7b parallel zu diesen Bördelrändern in das Innere der Membrantasche 5 eingesteckt sind. Die Lochungen sind in jenem Abschnitt der Rohre 6a und 6b vorgesehen, welcher sich im Inneren der Membrantasche 5 befindet.

Zwischen den Trennmembranen 1a und 1b, welche in Fig. 6 lediglich strichliert angedeutet sind, ist eine Lage 8 aus porösem Material innerhalb der Bördelränder 7a, 7b; 9a, 9b als innerer Abstandhalter angeordnet.

Soll ein Wickelmodul hergestellt werden, wird zweckmäßig eine weitere Lage 10 aus porösem Material auf die Membrantasche 5 gelegt und die Membratasche wird mit der Lage 10 als äußerem Abstandhalter um eines der Rohre eingerollt - im dargestellten Ausführungsbeispiel um das gelochte Rohr 6a, wie durch den strichliert gezeichneten, gebogenen Pfeil 11 in Fig. 6 angedeutet.

An den außen zu liegen kommenden Bördelrand 7b kann noch ein flexibles Bahnmaterial 12 angesetzt werden, welches unter Ausbildung eines äußeren Schutzmantels um die gerollte Membrantasche gelegt wird, wodurch ein im wesentlichen zylindrischer Körper entsteht, welcher in ein Hüllrohr 13 passenden Durchmessers eingebracht wird (Fig. 8). An jenem Ende des Hüllrohres 13, an dem die Rohre 6a, 6b aus der gerollten Membrantasche wegführen, wird eine Schicht aus Vergußmasse 14 eingebracht. Durch diese Vergußmasse 14 wird das eine Ende des Hüllrohres 13 verschlossen, gleichzeitig wird eine sichere Abdichtung der eingesteckten Rohre 6a und 6b an den Bördelrändern 7a, 9b und 7b und somit ein geschlossener Innenraum zwischen den Trennmembranen 1a und 1b geschaffen, und die gerollte Membrantasche wird an ihrem Platz gehalten. Das andere Ende des Hüllrohres 13 bleibt offen.

Beim Betrieb des Wickelmoduls kann an das offene Ende des Hüllrohres 13 zusätzlich Vakuum angelegt werden, und das aufzutrennende Medium wird durch eines der Rohre 6a oder 6b - meist unter Druck - zugeführt und durch das andere Rohr abgeführt. Das die Trennmembranen 1a und 1b durchdringende Permeat wird vom offenen Ende des Hüllrohres 13 abgezogen.

## Patentansprüche

1. Membrantasche aus zwei an ihren Rändern miteinander verbundenen Trennmembranen (1a, 1b) mit Zu- und Ableitungen, dadurch gekennzeichnet, daß die Ränder der Trennmembranen (1a, 1b) mindestens zweimal eingebördelt sind und zwischen den aufeinanderliegenden Bördelrändern Klebstofflagen (2, 4) vorgesehen sind.

2. Membrantasche nach Anspruch 1, dadurch gekennzeichnet, daß die Klebstofflagen bei zweimaliger Einbördelung aus einem beidseitig mit Klebstoff beschichteten, U-förmig gebogenen Band (4) gebildet sind.

3. Membrantasche nach einem der Ansprüche 1 und 2, dadurch gekennzeichnet, daß zwischen den Trennmembranen (1a, 1b) innerhalb der Bördelränder (7a, 7b; 9a, 9b) eine Lage (8) aus porösem Material als innerer Abstandhalter angeordnet ist.

4. Wickelmodul aus einer Membrantasche nach einem der Ansprüche 1 bis 3, dadurch gekennzeichnet, daß gelochte Rohre (6a, 6b) innenseitig zweier einander gegenüberliegender Bördelränder (7a, 7b) einer rechteckförmigen Membrantasche (5) angeordnet sind, die Membrantasche um eines der Rohre (6a) eingerollt ist und daß sich die gerollte Membrantasche in einem Hüllrohr (13) befindet.

5. Verfahren zur Herstellung einer Membrantasche nach einem der Ansprüche 1 bis 3, dadurch gekennzeichnet, daß zunächst zwei aufeinanderliegende Trennmembranen (1a, 1b) - gegebenenfalls unter Einfügen einer Lage aus porösem Material zwischen die Trennmembranen (1a, 1b) - an ihren Randbereichen miteinander verklebt werden, sodann die verklebten Ränder unter Zwischenfügung einer Klebstofflage gegenüber einer der beiden Trennmembranen eingebördelt und die so gebildete Bördelleiste unter Zwischenfügung einer zweiten Klebstofflage gegenüber der Trennmembran ein zweites Mal eingebördelt wird.

6. Verfahren nach Anspruch 5, dadurch gekennzeichnet, daß die Verklebungen mit einem kalt aushärtenden Klebstoff, wie einem Silikonkleber, hergestellt werden.

7. Verfahren nach Anspruch 5, dadurch gekennzeichnet, daß die Verklebungen mit einem heiß zu verarbeitenden Klebstoff, wie einem Schmelzklebstoff oder einem Heißsiegelkleber, hergestellt werden.

8. Verfahren nach Anspruch 5, dadurch gekennzeichnet, daß die verklebten Ränder unter Zwischenfügung eines beidseitig mit Klebstoff beschichteten Bandes (4) zweimal eingebördelt werden.

9. Verfahren nach einem der Ansprüche 5 bis 8 zur Herstellung eines Wickelmoduls nach Anspruch 4, dadurch gekennzeichnet, daß zwei gelochte Rohre (6a, 6b) innenseitig zweier einander gegenüberliegender Bördelränder (7a, 7b) einer rechteckförmigen Membrantasche (5) parallel zu diesen Bördelrändern in das Innere der Membrantasche (5) eingeführt werden, die Membrantasche - gegebenenfalls nach Auflegen einer Lage (10) aus porösem Material auf die Außenseite der Membrantasche (5) - um eines der Rohre (6a) eingerollt wird, die im wesentlichen Zylinderform aufweisende gerollte Membrantasche in ein Hüllrohr (13) gesteckt wird und das Hüllrohr (13) an einem seiner Enden, von welchem die Rohre (6a, 6b) aus der gerollten Membrantasche wegführen, mit einer Schicht aus Vergußmasse (14) verschlossen wird.

## Claims

1. Membrane bag comprising two separation membranes (1a, 1b) interconnected at their rims and having supply and drain means, characterised in that the rims of the separation membranes (1a, 1b) are flanged-in at least twice and that glue layers (2, 4) are provided between the superposed flange rims.

2. Membrane bag according to claim 1, characterised in that with twice flanged-in rims, the glue layers are formed by a strip (4) coated with glue on both sides thereof and bent in U-like manner.

3. Membrane bag according to one of claims 1 and 2, characterised in that a layer (8) of porous material is arranged between the separation membranes (1a, 1b) as an inner spacer within the flange rims (7a, 7b; 9a, 9b).

4. Winding module made from a membrane bag according to one of claims 1 to 3, characterised in that perforated tubes (6a, 6b) are arranged inside of two opposite flange rims (7a, 7b) of a rectangular membrane bag (5), the membrane bag is rolled-in around one of the tubes (6a), and that the rolled-up membrane bag is situated in an enveloping tube (13).

5. Method of producing a membrane bag according to one of claims 1 to 3, characterised in that at first two superposed separation membranes (1a, 1b) – optionally under insertion of a layer of porous material between the separation membranes (1a, 1b) – are glued together at their rim regions, then the glued rims are flanged in relative to one of the two separation membranes while interposing a glue layer and the thus formed flange ledge is flanged in a second time relative to the separation membrane while interposing a second glue layer.

6. Method according to claim 5, characterised in that the gluings are made with a cold-setting glue, such as a silicone glue.

7. Method according to claim 5, characterised in that the gluings are made with a glue to be processed in the hot state, such as a melting glue or a hot sealing glue.

8. Method according to claim 5, characterised in that the glued rims are twice flanged-in while interposing a strip (4) coated with glue on both sides thereof.

9. Method according to one of claims 5 to 8 for making a winding module according to claim 4, characterised in that two perforated tubes (6a, 6b) are introduced into the interior of the membrane bag (5) inside of two opposite flange rims (7a, 7b) of a rectangular membrane bag (5) in parallel to these flange rims, the membrane bag – optionally upon superposing of a layer (10) of porous material onto the outer side of the membrane bag (5) – is rolled around one of the tubes (6a), the rolled-up membrane bag having a substantially cylindrical shape is inserted into an enveloping tube (13) and the enveloping tube (13), at one end thereof, from which the tubes (6a, 6b) lead away from the rolled-up membrane bag, is closed with a layer of pourable sealing mass (14).

## Revendications

1. Poche à membranes constituée de deux membranes séparatrices (1a, 1b) réunies l'une à l'autre par leurs bords, avec conduite d'arrivée et de départ, caractérisée en ce que les bords des membranes séparatrices (1a, 1b) sont rabattus au moins deux fois; et en ce que des couches d'adhésif (2, 4) sont prévues entre les bords, rabattus l'un sur l'autre.

2. Poche à membranes selon la revendication 1, caractérisée en ce que, dans le cas d'un double rabattement des bords, les couches adhésives sont formées d'un ruban (4) revêtu d'adhésif des deux côtés et plié en forme de U.

3. Poche à membranes selon l'une des revendications 1 et 2, caractérisée en ce qu'entre les membranes séparatrices (1a, 1b), à l'intérieur des bords rabattus (7a, 7b; 9a, 9b), est disposée, comme écarteur intérieur, une couche (8) de matériau poreux.

4. Module enroulé constitué d'une poche à membranes selon l'une des revendications 1 à 3, caractérisé en ce que des tubes perforés (6a, 6b) sont disposés du côté intérieur de deux bordures rabattues (7a, 7b), opposées l'une à l'autre, d'une poche à membranes de forme rectangulaire (5); en ce que la poche à membranes est enroulée autour de l'un des tubes (6a); et en ce que la poche à membranes, enroulée, se trouve dans un tube enveloppe (13).

5. Procédé de fabrication d'une poche à membranes selon l'une des revendications 1 à 3, caractérisé en ce que l'on colle tout d'abord l'une à l'autre, sur leurs zones de bordure, deux membranes séparatrices (1a, 1b) posées l'une sur l'autre – éventuellement avec interposition d'une couche de matériau poreux entre les membranes séparatrices (1a, 1b), puis que l'on rabat les bords, ainsi collés, avec interposition d'une couche d'adhésif, en face de l'une des deux membranes séparatrices et que l'on rabat une seconde fois la bordure rabattue ainsi formée, en face de la mambrane séparatrice, avec interposition d'une seconde couche d'adhésif.

6. Procédé selon la revendication 5, caractérisé en ce que l'on réalise les collages avec un adhésif durcissant à froid telle qu'une colle aux silicones.

7. Procédé selon la revendication 5, caractérisé en ce que l'on réalise les collages avec un adhésif à traiter à chaud, tel qu'un adhésif à fondre ou une colle de scellement à chaud.

8. Procédé selon la revendication 5, caractérisé en ce que l'on rabat deux fois les bords collés avec interposition d'un ruban (4) revêtu d'adhésif des deux côtés.

9. Procédé selon l'une des revendications 5 à 8, pour fabriquer un module enroulé selon la revendication 4, caractérisé en ce que l'on introduit à l'intérieur de la poche à membranes (5) deux tubes perforés (6a, 6b) du côté intérieur de deux bordures rabattues (7a, 7b), opposées l'une à l'autre, d'une poche à membranes (5) de forme rectangulaire, parallèlement à ces bordures rabattues; en ce que l'on enroule la poche à membranes – éventuellement après avoir posé une couche (10) de matériau poreux sur la face extérieure de la poche à membranes (5) – autour de l'un des tubes (6a); en ce que l'on enfile la poche à membranes, enroulée et présentant sensiblement une forme cylindrique, dans un tube enveloppe (13); et en ce que l'on obture, avec une couche de produit de remplissage (14), le tube enveloppe (13) à celle de ses extrémités d'où les tubes (6a, 6b) dépassent hors de la poche à membranes enroulée.

Fig. 1

Fig. 2

Fig. 3

Fig. 4

Fig. 5

Fig. 6

Fig. 7

Fig. 8